# FASCICULE DE BREVET EUROPEEN

(11) **EP 2 178 778 B1**
(45) Date de publication et mention de la délivrance du brevet: **07.03.2012**
(21) Numéro de dépôt: 08827824.7
(22) Date de dépôt: 30.07.2008
(51) Int. Cl.: B65G 47/84, B65G 47/71

(54) **DISPOSITIF DE CONVOYAGE DE RECIPIENTS DIVISANT UN FLUX PRINCIPAL DE RECIPIENTS EN UNE PLURALITE DE FLUX SECONDAIRES**
GEFÄSSFÖRDERVORRICHTUNG ZUR TRENNUNG EINES HAUPTGEFÄSSFLUSSES IN MEHRERE SEKUNDÄRFLÜSSE
VESSEL CONVEYING DEVICE SEPARATING A MAIN VESSEL FLOW INTO A PLURALITY OF SECONDARY FLOWS

(30) Priorité: 01.08.2007 FR 0705631
(43) Date de publication de la demande: 28.04.2010
(73) Titulaire: Sidel Participations, 76930 Octeville Sur Mer (FR)
(72) Inventeur: NGUYEN, Daniel, F-76930 Octeville S/Mer (FR); MORIN, Stéphane, F-76930 Octeville S/Mer (FR); LANGLOIS, Pierre-François, F-76930 Octeville S/Mer (FR)
(74) Mandataire: Cabinet Plasseraud
(86) Numéro de dépôt international: PCT/FR2008/051439
(87) Numéro de publication internationale: WO 2009/024715

(56) Documents cités:
- WO-A-2005/037685
- DE-A1- 19 816 239

## Description

La présente invention porte sur un dispositif de convoyage de récipients, du type bouteilles, destiné à permettre la division d'un flux principal de récipients, alimenté en sortie d'une machine amont de traitement de récipients, en une pluralité de flux secondaires de récipients qui sont destinés respectivement à une pluralité de machines situées en aval.

L'invention s'applique plus particulièrement pour le convoyage de récipients soufflés, tels que des bouteilles, en sortie d'un carrousel de soufflage constitué d'une pluralité de postes de soufflage disposés à sa périphérie.

Après l'opération de soufflage en sortie du carrousel de soufflage, les bouteilles soufflées doivent être convoyées vers d'autres machines de traitement comme, par exemple, des remplisseuses ou des palettiseurs en vue de leur transport vers un autre site.

Compte tenu des cadences de production des machines de soufflage, il est nécessaire de diviser le flux en sortie d'une telle machine pour, notamment, éviter les problèmes de coincement des bouteilles dans les convoyeurs d'acheminement et, parfois, pour permettre l'alimentation en continu des machines de traitement en aval, qui ont une cadence de production moins élevée.

Un mode de réalisation d'un dispositif de répartition et de convoyage de récipients, du type bouteilles, est décrit dans le document FR2801045. Toutefois, ce dispositif comporte encore des portions de guidage des bouteilles, au niveau de leur col, qui peuvent générer des incidents à cause des frottements.

Une autre forme de réalisation, décrite dans le document WO 2005/037685 montre, dans le cadre d'une installation de palettisation, un système de division d'un flux de bouteilles provenant d'une machine de soufflage. Ce système comprend une roue de décharge qui est associée à la machine de soufflage pour prendre en charge les bouteilles façonnées. Cette roue de décharge propose ensuite les bouteilles à un ou deux convoyeurs, selon le cas, du type à chaîne sans fin, équipés de pinces, lesquels convoyeurs alimentent à leur tour plusieurs roues intermédiaires qui déposent les bouteilles à l'entrée de convoyeurs à bandes ou de convoyeurs pneumatiques.

Dans cette installation, la roue de décharge et les différentes roues intermédiaires prennent les bouteilles par le corps, c'est-à-dire sur une partie de la bouteille qui est encore fraîche de moulage parce qu'elle sort de la machine de soufflage. Cette partie de la bouteille, le corps, est relativement souple ; elle ne constitue pas une zone de référence très précise pour les transferts de bouteilles et notamment pour des transferts vers des convoyeurs à chaîne équipés de pinces qui saisissent les bouteilles par le goulot dans la zone d'accueil de la bague d'inviolabilité qui se situe entre la collerette et la partie filetée dudit goulot.

De plus, pour cette installation, il n'est pas facile de passer rapidement d'un type de bouteille à un autre, c'est-à-dire de convoyer plusieurs types de bouteilles dont les corps sont de formats et de caractéristiques dimensionnelles différents, (par exemple en passant d'un récipient d'une contenance d'un litre à un récipient d'une contenance de deux litres).

La présente invention propose donc de résoudre les problèmes de l'art antérieur, liés à ce type de traitement de flux de bouteilles, à l'aide d'un dispositif de convoyage précis et original ne nécessitant pas d'intervention ni de réglage liés notamment aux caractéristiques dimensionnelles du corps de la bouteille ou du récipient.

Le système de convoyage selon l'invention permet aussi de simplifier le circuit des bouteilles et de fiabiliser ce transfert de bouteilles entre la sortie de la machine de soufflage et les convoyeurs finaux. Ce transfert, qui s'effectue à grande vitesse, génère en effet, au niveau des bouteilles, un mouvement d'oscillation lié à leur centrifugation, lequel mouvement a tendance à dégrader la précision de la position du goulot desdites bouteilles par rapport aux pinces de préhension et à générer des incidents lors du transfert desdites bouteilles.

Pour pallier à ces problèmes d'oscillations, l'invention propose aussi un aménagement particulier des systèmes de pinces, au niveau de leurs branches de préhension des bouteilles.

De même, le transfert final des bouteilles dans les organes d'acheminement du type convoyeurs pneumatiques ou autres, demande lui aussi une attention particulière car les bouteilles passent d'un système de transfert où elles sont prisonnières de leur support en forme de pinces à un système de convoyage où elles sont relativement libres, guidées simplement sous leur collerette et propulsées, au niveau de leur goulot, par un souffle d'air qui sort par des ouïes directionnelles aménagées dans les parois d'un caisson alimenté en air comprimé, comme décrit, par exemple, dans le document FR2781470.

Le passage d'un système de transfert à maintien positif à un système de convoyage à maintien relatif requiert donc lui aussi quelques aménagements particuliers au niveau des pinces pour réaliser le passage de l'un à l'autre de ces systèmes de convoyage avec précision et avec toute l'efficacité requise.

Selon un premier de ses aspects, la présente invention porte sur un dispositif de convoyage et de transfert, à l'aide de pinces, de récipients du type bouteilles, entre, par exemple, un organe d'alimentation et des organes d'acheminement du genre convoyeurs, lequel dispositif comprend :
- une roue primaire d'entrée animée en rotation et équipée de pinces qui sont portées par des bras disposés en étoile,
- des moyens de transfert situés entre ladite roue primaire d'entrée et lesdits organes d'acheminement, lesquels moyens sont munis de pinces plates également dont la vitesse tangentielle correspond à celle desdites pinces de ladite roue primaire,
laquelle roue primaire d'entrée comporte plusieurs familles de pinces plates qui saisissent les bouteilles sous la collerette, sur la bague située directement sous ladite collerette, et chaque famille de pinces est associée à un mécanisme de commande pour réaliser l'ouverture et la fermeture desdites pinces en synchronisme avec, d'une part, les moyens de tenue desdites bouteilles au niveau dudit organe d'alimentation et, d'autre part, lesdites pinces desdits moyens de transfert,
lesquels moyens de transfert sont constitués de plusieurs roues secondaires dont le nombre correspond au nombre de familles de pinces réparties sur ladite roue primaire d'entrée, chaque roue secondaire comportant : - des pinces, qui sont également portées par des bras disposés en étoile sur un plateau, et - un mécanisme de commande desdites pinces pour réaliser leur ouverture et leur fermeture en synchronisme avec, d'une part, l'ouverture et la fermeture des pinces correspondantes de ladite roue primaire et, d'autre part, les moyens de prise en charge disposés au niveau des organes d'acheminement.

Le dispositif selon l'invention fonctionne avec des pinces qui sont en contact avec une partie spécifique de la bouteille, à savoir la zone qui est constituée du goulot, de la collerette et de la bague située directement sous ladite collerette. Cette zone de la bouteille constitue une partie solide et stable qui est commune à un grand nombre de bouteilles. Elle permet de fiabiliser les opérations de transfert des bouteilles comme c'est notamment le cas pour ces opérations de division d'un flux initial de bouteilles en plusieurs flux, lesquelles opérations requièrent une très grande précision.

Selon l'invention, les moyens de commande des pinces des différentes roues sont constitués de galets aptes à suivre un chemin de came façonné sur la périphérie d'un plateau fixe qui est centré sur l'axe de la roue primaire ou secondaire correspondante.

Toujours selon l'invention, la roue primaire d'entrée est associée à plusieurs plateaux superposés comportant le chemin de came de manoeuvre des pinces, chaque plateau étant associée à une famille de pinces pour réaliser l'ouverture et la fermeture desdites pinces en synchronisme avec, d'une part, les moyens de tenue des bouteilles au niveau de l'organe d'alimentation et, d'autre part, les pinces des différentes roues secondaires.

Selon une autre disposition de l'invention, les pinces des différentes roues comportent, aménagés sur l'une au moins de leurs branches, des moyens de calage qui s'étendent sur la hauteur du goulot des bouteilles pour maintenir l'axe de ce goulot dans une position précise, parallèle à l'axe desdites roues et ces moyens sont aménagés de façon complémentaire pour pouvoir s'engrener autour dudit goulot et contrarier le mouvement d'oscillation des bouteilles qui résulte de leur centrifugation.

Toujours selon l'invention, pour les pinces de la roue primaire d'entrée, les moyens de calage du goulot sont constitués d'une butée disposée sur la partie intérieure de la branche amont des pinces, laquelle butée est façonnée pour épouser au moins une portion du contour extérieur de la partie supérieure dudit goulot de façon à proposer, à ce dernier, des appuis nettement séparés dans le sens de la hauteur et de façon à réaliser une sorte d'encastrement de ce goulot dans cet ensemble constitué des deux branches de la pince et de ladite butée.

Toujours selon l'invention, pour les pinces des roues secondaires, les deux branches desdites pinces comportent chacune, sur leur dessus, une surépaisseur façonnée pour épouser une portion du contour supérieur extérieur du goulot et former, en position active de maintien, une sorte de mors en forme de U qui enserre partiellement ladite partie supérieure du goulot, lesquelles branches, avec lesdites surépaisseurs, réalisent, là aussi une sorte d'encastrement qui contrarie les oscillations des bouteilles et qui les immobilise pendant leur transfert d'une roue à l'autre ou d'une roue à un organe quelconque d'acheminement.

Selon une autre disposition de l'invention, dans le cas d'un transfert vers un organe d'acheminement du type convoyeur pneumatique, par exemple, la branche aval des pinces des roues d'alimentation dudit organe comporte un prolongement en forme de doigt plat, lequel doigt est aménagé pour accompagner et pousser le goulot de la bouteille dans l'entrée dudit convoyeur pneumatique, afin de le propulser dans la zone du convoyeur où il est pris en charge efficacement par le flux d'air pulsé sortant des ouïes des caissons dans lesquels circule l'air comprimé.

Afin de permettre le transfert des bouteilles vers une pluralité de postes de traitement, tels que des étiqueteuses ou des palettiseurs, le dispositif de convoyage et de répartition selon l'invention comprend un nombre de convoyeur pneumatique qui correspond au nombre de familles de pinces réparties sur la roue primaire d'entrée, ainsi qu'au nombre de roues secondaires.

Alternativement, afin de permettre une division encore plus importante d'un flux principal de bouteilles en sortie d'une machine de soufflage, par exemple, le dispositif de convoyage et de répartition selon l'invention comprend plusieurs étages de division dudit flux principal :
- un premier étage de division situé en aval de l'organe d'alimentation et qui comprend une roue principale d'entrée qui distribue les bouteilles à une première série de roues primaires,
- plusieurs seconds étages de division situés chacun à la sortie de chaque roue primaire de ladite première série et constitués des roues secondaires qui alimentent les différents organes d'acheminement des bouteilles.

Selon un second de ses aspects, la présente invention porte sur un procédé de convoyage de bouteilles permettant la division d'un flux principal de bouteilles en une pluralité de flux secondaires de bouteilles, lequel procédé comprend au moins les étapes suivantes :
- saisie des bouteilles provenant de l'organe d'alimentation, ladite saisie s'effectuant par le dessous de leur collerette, sur la zone en forme de bague située directement sous ladite collerette, au moyen de pinces portées par des bras disposés en étoile sur une roue primaire d'entrée animée en rotation;
- transfert des familles des bouteilles saisies par ladite roue primaire vers des pinces disposées en bout de bras de transfert portés par les roues secondaires de convoyage, lesquelles pinces desdites roues secondaires saisissent les bouteilles au-dessus de leur collerette, sur la zone en forme de bague qui se situe entre ladite collerette et le filetage aménagé sur le goulot ;
- et transfert de chaque famille de bouteilles vers un organe d'acheminement approprié du type convoyeur pneumatique, par exemple, qui prend en charge les bouteilles sous ladite collerette entre des guides.

La présente invention est maintenant décrite à l'aide d'exemples uniquement illustratifs et nullement limitatifs de la portée de l'invention, et à partir des dessins suivants, dans lesquels :
- la figure 1 est une vue en perspective d'un mode de réalisation du dispositif de convoyage et de répartition de bouteilles, selon l'invention, permettant la division d'un flux principal de bouteilles convoyées par une roue primaire en deux flux secondaires de bouteilles ;
- la figure 2 est une vue partielle, en perspective, d'un mode de réalisation d'un bras muni d'une pince, monté sur la roue primaire, permettant de réaliser le transfert d'une bouteille vers une autre pince ;
- la figure 3 est une vue partielle, en perspective également, d'un mode de réalisation d'un bras muni d'une pince, monté sur les différentes roues secondaires, dont ladite pince prend en charge la bouteille amenée par la pince de la roue primaire ;
- la figure 4 est une vue en perspective agrandie montrant, d'une part, l'opération de transfert d'une bouteille d'une pince à l'autre et, d'autre part, l'introduction de la bouteille dans l'entrée d'un convoyeur du type pneumatique qui est représenté sans son système de propulsion par air comprimé ;
- la figure 5 montre l'entrée d'un convoyeur du type pneumatique adapté pour accueillir des bouteilles amenées par les pinces de la roue secondaires ;
- la figure 6 est une vue détaillée, à plus grande échelle, d'une portion de la figure 1 montrant, notamment, les cames de commande de chaque famille de pinces ;
- la figure 7 est une vue en perspective d'une forme de réalisation supplémentaire du dispositif de convoyage et de répartition de bouteilles selon l'invention permettant la division d'un flux principal de bouteilles en quatre flux secondaires de bouteilles.

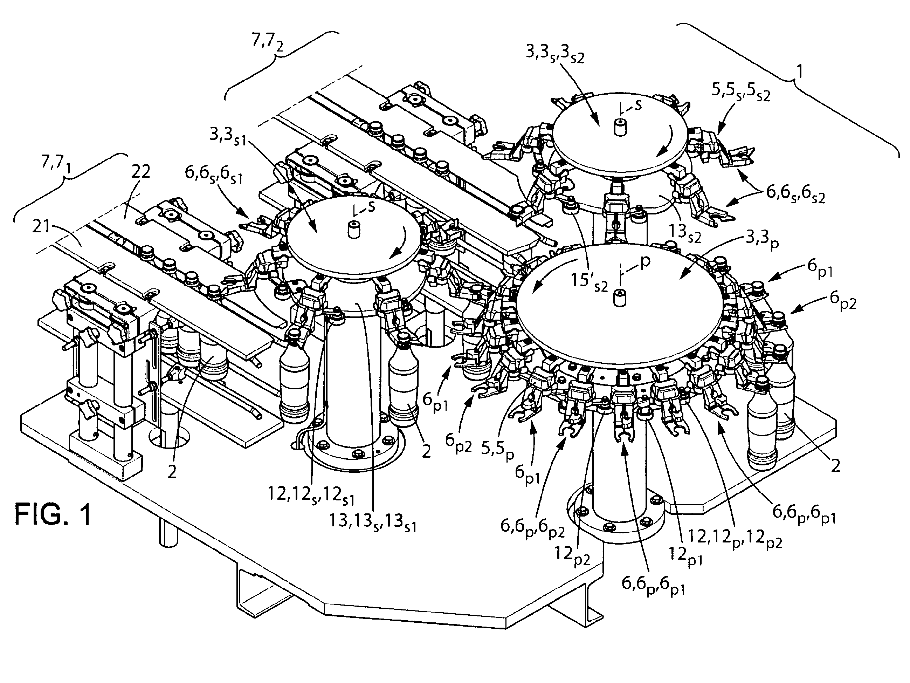

Il est représenté sur la figure 1 une vue en perspective d'une première forme de réalisation d'un dispositif 1 de convoyage et de transfert de récipients, du type bouteille 2, lequel dispositif comprend une pluralité de roues 3 qui sont animées en rotation de façon synchronisée, comme des engrenages.

Ce dispositif 1 comprend une première roue dénommée dans la suite du texte roue 3p primaire de convoyage. Cette roue 3p présente un axe de rotation sensiblement vertical et elle est alimentée tangentiellement par un organe d'alimentation, schématisé par une simple flèche, lequel organe est, par exemple, en relation avec les moyens de décharge d'une machine de soufflage non représentée. La roue 3p primaire transfère et alimente tangentiellement, à son tour, plusieurs roues 3 qui sont dénommées roues 3s secondaires dans la suite du texte, toujours dans le cas d'un dispositif de division de flux, comme représenté figure 1.

Ces différentes roues 3 se présentent, par exemple, sous la forme d'une plaque circulaire à la périphérie de laquelle sont fixés des bras 5 régulièrement espacés et disposés en étoile. Elles sont mises en rotation, de façon synchronisée, par des moyens moteurs et d'entraînement de type connus en soi et non représentés sur les figures.

Chaque bras 5 est équipé d'une pince 6 qui coopère avec des moyens de manoeuvre pour saisir, transférer puis relâcher la bouteille lorsqu'elle est prise en charge.

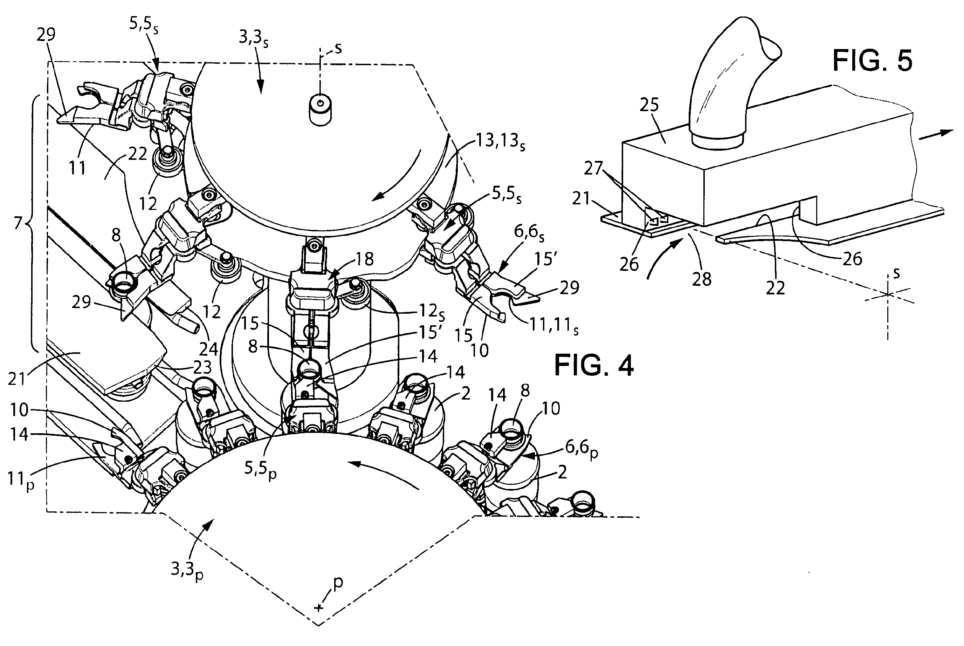

Dans l'exemple représenté figure 1, la prise en charge finale des bouteilles 2 véhiculées par les roues secondaires 3s est faite tangentiellement aussi par des organes d'acheminement du genre convoyeurs 7 et en particulier, comme détaillé plus loin en liaison avec la figure 4, des convoyeurs 7 du type pneumatique.

Ce dispositif 1 de convoyage peut donc transformer un flux primaire de bouteilles 2, provenant par exemple d'une machine de soufflage, en plusieurs flux de bouteilles, deux, trois ou plus selon les possibilités dimensionnelles, pour alimenter à des cadences plus réduites, des machines de préparation desdites bouteilles.

Pour réaliser cet éclatement du flux primaire, le dispositif 1 comporte une roue 3p primaire qui comprend autant de familles de pinces 6 qu'il y a de roues 3s secondaires à desservir et chaque roue 3s secondaire alimente directement un organe 7 d'acheminement.

Le dispositif 1 représenté figure 1 comporte une roue primaire 3p et deux roues 3s secondaires ; une première roue 3s1 secondaire alimente un convoyeur 7.1 et la seconde roue 3s2 secondaire alimente un autre convoyeur 7.2.

Le nombre de familles de pinces 6p1, d'une part, et 6p2, d'autre part, sur la roue 3p primaire, correspond en fait au nombre de convoyeur 7 à desservir.

Le nombre de pinces 6p1 sur la roue 3p primaire et le nombre de pinces 6s disposées sur les roues 3s secondaires sont notamment établis en fonction de la place qui est disponible, sur le site de l'installation, pour loger les différentes roues.

Les couples de roues 3p-3s fonctionnent à la manière des engrenages ; ils fonctionnent avec des vitesses circonférentielles rigoureusement identiques au niveau de leur point de tangence pour obtenir un synchronisme parfait au niveau de chacun desdits couples de pince où une pince lâche sa bouteille au moment même où l'autre la prend en charge.

L'entrainement des différentes roues s'effectue, par exemple, au moyen de transmission à chaînes ou à courroies dentées.

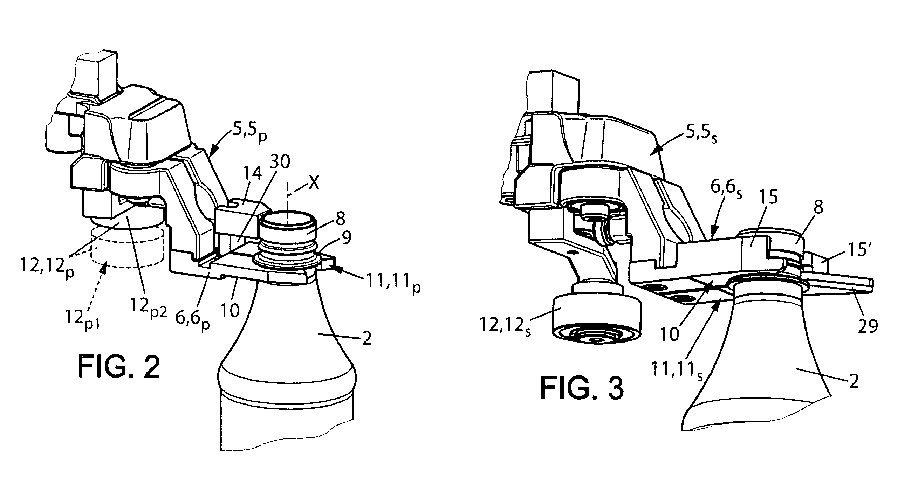

Les figures 2 et 3 montrent d'une façon détaillée, les deux systèmes de pince 6 qui sont utilisés pour réaliser ces transferts ; ces deux systèmes de pince sont réalisés différemment car, comme détaillés ci-après, l'un est aménagé pour saisir la bouteille 2 sous sa collerette et l'autre pour la saisir au-dessus de ladite collerette.

De manière courante, la bouteille 2 comprend une partie supérieure constituée d'un goulot 8 et, située à la base dudit goulot 8, on trouve une collerette 9. De part et d'autre de cette collerette 9, on trouve une zone en forme de bague qui peut coopérer avec les branches d'une pince plate.

Chaque pince 6 est constituée, de façon classique, de deux branches 10 et 11 articulées et dont les extrémités sont aménagées en forme de mâchoires pour enserrer la bouteille 2. Ces deux branches 10 et 11 sont manoeuvrées simultanément par un système de commande comprenant un galet 12 qui coopère avec un chemin de came, lequel galet 12 est fixé en extrémité d'un bras de levier apte à pivoter et entraîner l'écartement et le rapprochement par pivotement des deux branches 10, 11.

Le galet 12 est apte à se déplacer sur un chemin de came prévu sur le pourtour extérieur d'un plateau 13 qui est fixe, lequel plateau est détaillé plus loin en liaison avec les figures appropriées. Ce plateau 13 est centré sur l'axe de la roue 3p ou 3s à laquelle il est associé et il est disposé de manière sensiblement parallèle au plateau rotatif de ces roues 3p et 3s sur lequel sont fixés les bras 5 et les pinces 6 de transfert.

De manière alternative, il est également possible de prévoir le chemin de came sur un pourtour intérieur du plateau 13 fixe.

Les bouteilles 2 sont saisies par les mâchoires des branches 10 et 11, lesquelles mâchoires se présentent sous la forme de plat de faible épaisseur. Pour améliorer la tenue des bouteilles 2 pendant leur transfert, les branches 10 et 11 comportent des moyens complémentaires de calage détaillés plus loin.

Sur la figure 2, qui montre le système de pince 6 de la roue 3p primaire, on remarque la présence de deux galets 12 ; l'un est représenté en trait fort et l'autre en traits mixtes fins.

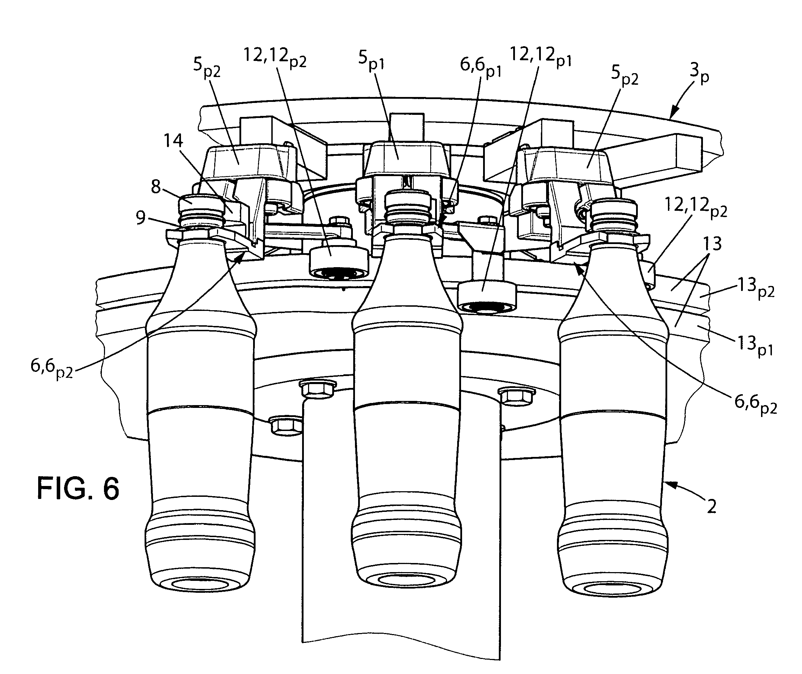

Le galet 12p1, représenté en traits mixtes fins, est associé à l'une des familles de pinces, les pinces 6p1 visibles figures 1 et 6 notamment, alors que l'autre galet 12p2, représenté en trait fort, est associé à la famille de pinces 6p2.

Les moyens de calage complémentaires des bouteilles 2, dont il était question auparavant, sont disposés sur l'une des branches de la pince 6p et en particulier sur la branche 11p, c'est-à-dire la branche qui est en amont lorsque l'on prend en compte le sens de rotation de la roue 3p. Ces moyens de calage sont constitués d'une butée 14 qui se situe vers le centre de la roue 3p par rapport à l'orifice de positionnement de la bouteille 2 dans la pince 6p ; cette butée 14 est en contact avec la partie supérieure du goulot 8, c'est-à-dire avec la partie qui tend à se déplacer vers le centre de ladite roue 3p sous l'effet de la centrifugation de la bouteille 2 pendant son transfert.

Cette butée 14 s'étend en saillie vers le goulot 8, au-dessus de la branche 11, laissant un espace entre elle et le dessus de ladite branche, et sa surface active de contact avec le goulot 8 est façonnée en forme de portion de cylindre afin de couvrir environ 1/6 à 1/8 de la partie supérieure du pourtour dudit goulot 8.

De par la présence de cette butée 14, le goulot 8 de la bouteille 2 est fermement tenu par les pinces 6 des bras 5 de transfert selon une direction sensiblement verticale et n'est donc pas soumis à des mouvements de basculement ou de pivotement lors de son convoyage et transfert d'une roue à une autre.

De la même façon, et pour les mêmes raisons, des moyens de calage sont aménagés sur la pince 6s, représentée figure 3, et en particulier sur chaque branche 10 et 11. Ces moyens de calage se présentent sous la forme de deux mors 15, 15', façonnés en surépaisseur sur chaque branche 10 et 11 respectivement, pour envelopper la partie supérieure du goulot 8. Ces mors 15, 15', enserrent le goulot 8 sur une bonne moitié de sa circonférence et forment une sorte de U en position active, autour dudit goulot.

Lors de la mise en concordance tangentielle des pinces 6p et 6s, la butée 14 et les mors 15, 15', s'engrènent autour du goulot 8 avec un jeu suffisant pour éviter toute interférence entre lesdites pinces.

La figure 4 montre cet engrènement des moyens de calage qui sont aménagés sur les pinces 6p et 6s. Au moment précis où la bouteille 2 est dans l'alignement des axes P et S des roues 3p et 3s respectivement, la bouteille est prise dans les mâchoires des branches 10 et 11 de chaque pince 6p, 6s, respectivement en dessous et au-dessus de sa collerette 9 et le goulot 8 est calé dans une sorte de cage constituée, d'une part, de la butée 14 et, d'autre part, des mors 15 et 15'.

La figure 4 montre également le plateau 13s dont le pourtour extérieur forme le chemin de came du galet 12s servant à manoeuvrer les branches de la pince 6s correspondante le moment opportun. Ce plateau 13s est fixe et il est centré sur l'axe S de la roue 3s.

Le profil de la came est aménagé pour permettre, d'une part, la prise en charge des bouteilles 2 qui sont amenées par la roue 3p primaire et, d'autre part, la libération des bouteilles à l'entrée de l'organe d'acheminement qui est associé à la roue 3s, lequel organe d'acheminement est constitué, par exemple, d'un convoyeur 7 pneumatique.

Ce convoyeur pneumatique apparaît, figure 4, sans le caisson d'amenée de l'air comprimé qui permet de propulser les bouteilles 2 ; ce caisson est représenté seul, à part, figure 5.

Les bouteilles 2 sont amenées par les pinces 6s à l'entrée du convoyeur 7 par les pinces 6s. Ce convoyeur 7 pneumatique est constitué de deux rails 21 et 22 qui permettent de réaliser un guidage de la bouteille 2 sous col c'est-à-dire que la bouteille repose sur les deux rails 21 et 22 par sa collerette 9 et qu'elle est guidée au niveau de la zone qui se situe sous cette collerette 9 et qui se présente sous la forme d'une bague dont le diamètre correspond au diamètre du goulot 8.

Le rail 21 se situe en quelque sorte à l'extérieur par rapport au rail 22 qui, lui, se situe du côté de la roue 3s. Ce rail 21 a une entrée 23 qui se situe en amont de l'entrée 24 du rail 22 intérieur. L'entrée 24 se situe, sensiblement, sur une radiale de la roue 3s et cette radiale est perpendiculaire aux rails de guidage 21 et 22, comme schématisé figure 5.

On remarque, toujours figure 5, l'aménagement du caisson 25 dans lequel circule l'air comprimé qui permet de véhiculer les bouteilles. Ce système de convoyage pneumatique est détaillé dans le document FR2781470 précité ; il comporte des parois 26 latérales entre lesquelles passe le goulot 8 des bouteilles 2. Ces parois 26 comportent une multitude d'ouïes 27 découpées dans lesdites parois 26 pour former un flux d'air orienté dans le sens de déplacement des bouteilles 2.

Les bouteilles 2 portées par les pinces 6s pénètrent dans une fenêtre 28 aménagée à l'entrée du caisson 25 pour permettre le passage desdites pinces 6s.

Dans cette entrée du caisson 25, les bouteilles 2 ne sont pas soumises immédiatement à la totalité du flux d'air chargé de les acheminer vers d'autres postes et/ou d'autres machines. Aussi, pour prolonger l'effet d'accompagnement des bouteilles 2 par les pinces 6s, ces dernières comportent, disposé à l'extrémité de leur branche 11 s aval, un prolongement en forme de doigt 29, représenté notamment figures 3 et 4. Ce doigt 29 est taillé en biais ; vu de dessus, il forme un triangle installé en bout de la branche 11p et son côté externe est dans le prolongement du côté externe de ladite branche 11s. Il accompagne et donne une dernière impulsion au goulot 8 et à la bouteille 2 pour la l'aider à atteindre l'entrée du couloir formé par les deux parois 26.

Pour éviter toute interférence entre le doigt 29 et la butée 14 qui est installée sur la branche 11p des pinces 6p, un espace 30 entre ladite butée 14 et ladite branche 11p est prévu, visible figure 2 notamment.

La vitesse de déplacement des bouteilles dans les convoyeurs 7 est nettement inférieure à la vitesse des bouteilles en sortie de la machine de soufflage. Le facteur de réduction dépend du nombre de convoyeurs et donc du nombre de familles de pinces 6p situées sur la roue 3p primaire.

La figure 1 montre un exemple de division de la vitesse par deux entre l'arrivée et la sortie du dispositif 1 de convoyage. Ce mode de réalisation est également représenté de façon plus détaillé, à une échelle plus grande, figure 6, pour montrer la roue 3p primaire avec ses deux familles de bouteilles 2, ainsi que les deux jeux de pinces 6p et les moyens de commande et de manoeuvre de ces pinces 6p.

Les deux familles de bouteilles 2 se répartissent sur la roue 3p et les pinces 6p se répartissent en deux jeux de pinces comme indiqué précédemment : - un premier jeu de pinces 6p1 et - un second jeu de pinces 6p2 ; lesdits jeux sont disposés en étoile et ils sont. décalés angulairement, avec le même nombre de pinces 6p chacun.

Le premier jeu de pinces 6p1, figure 6, est associé à un plateau 13p1 dont le pourtour est aménagé en forme de came afin de manoeuvrer les différentes pinces par l'intermédiaire du galet 12p1. Le profil de la came permet, d'une part, de prendre en charge une bouteille sur deux parmi celles qui sont amenées par l'organe d'alimentation et, d'autre part, de la lacher au moment où elle est prise en charge par la pince 6s correspondante de la roue 3s secondaire.

De la même façon, le second jeu de pinces 6p2 fonctionne avec un plateau 13p2 dont le pourtour est aménagé avec un profil de came pour manoeuvrer les différentes pinces 6p2 et, d'une part, prendre en charge les bouteilles à raison d'une sur deux parmi celles qui sont amenées par l'organe d'alimentation, et, d'autre part, ensuite, larguer les bouteilles 2 dans le convoyeur 7 approprié..

De manière générale, la présente invention porte aussi sur un procédé de convoyage de récipients permettant la division d'un flux principal de bouteilles 2 en une pluralité de flux secondaires de bouteilles 2, le procédé selon l'invention comprenant au moins les étapes suivantes :
- saisie de bouteilles 2 par les pinces 6 des bras 5 de transfert d'une roue 3p primaire de convoyage ;
- transfert d'une partie des bouteilles 2 saisies par la roue 3p primaire de convoyage à des pinces 6 portées par des bras 5 de transfert d'une roue 3s secondaire de convoyage ;
- transfert d'une autre partie des bouteilles 2 saisies par la roue 3p primaire de convoyage à des pinces portées par des bras 5 de transfert d'une autre roue 15 secondaire de convoyage.

Plus précisément, le procédé selon l'invention comprend les étapes de :
- saisie des bouteilles 2 en sortie d'un ensemble d'alimentation d'un flux de bouteilles, tel qu'une machine de soufflage de bouteilles ou une roue de convoyage à bras de transfert, par une pluralité de pinces 6p portées par des bras 5p de transfert fixés sur une roue 3p primaire de convoyage ;
- fermeture d'une pince 6s portée par un bras 5s de transfert appartenant à une première roue 3s secondaire de convoyage sur une bouteille 2 maintenue par une pince 6p d'un bras 5p de transfert de la roue 3p primaire, puis ouverture de ladite pince 6p primaire, ce grâce à quoi la bouteille 2 est saisie par la pince 6s de la première roue 3s secondaire et une partie du flux des bouteilles 2 convoyées par la roue 3p primaire peut ainsi être transférée à la première roue 3s secondaire;
- fermeture d'une pince 6s d'un bras 5s de transfert appartenant à une deuxième roue 3s secondaire de convoyage sur une bouteille 2 maintenue par une pince 6p d'un bras 5p de transfert de la roue 3p primaire de convoyage, puis ouverture de ladite pince 6p dudit bras de 5p transfert de la roue 3p primaire, ce grâce à quoi la bouteille 2 est saisie par la pince 6s du bras 5s de transfert de la deuxième roue 3s secondaire et une partie du flux des bouteilles 2 convoyées par la roue 3p primaire peut ainsi être transférée à la deuxième roue 3s secondaire.

Ainsi, dans le cas où l'on souhaite diviser encore une fois les bouteilles convoyées par les roues 3s secondaires, le procédé selon l'invention comprend de manière supplémentaire une étape de transfert partiel du flux des bouteilles convoyées par au moins une des roues 3 de convoyage vers une autre roue de convoyage.

De manière alternative, si on ne souhaite plus diviser le flux de bouteilles convoyées par les roues 3s secondaires, le procédé selon l'invention peut comprendre une étape de transfert des bouteilles saisies par au moins une roue secondaire vers un convoyeur 7 pneumatique.

De manière préférentielle, le procédé comprend une étape de solidarisation d'une pince 6p du bras 5 de transfert sur au moins une bouteille 2 convoyée présentant une collerette 9 soit par saisie de la bouteille sous sa collerette 9, soit par saisie du goulot 8 du récipient 2 au-dessus de la collerette 9.

De manière supplémentaire, le procédé comprend une étape de commande de l'ouverture et de la fermeture de l'extrémité radiale en forme de pince 6 des bras 5 de transfert par l'intermédiaire du roulement d'un galet 12 appartenant au bras 5 de transfert sur un chemin de came formé sur le pourtour extérieur d'un plateau 13 fixe qui est disposé sous la roue 3.

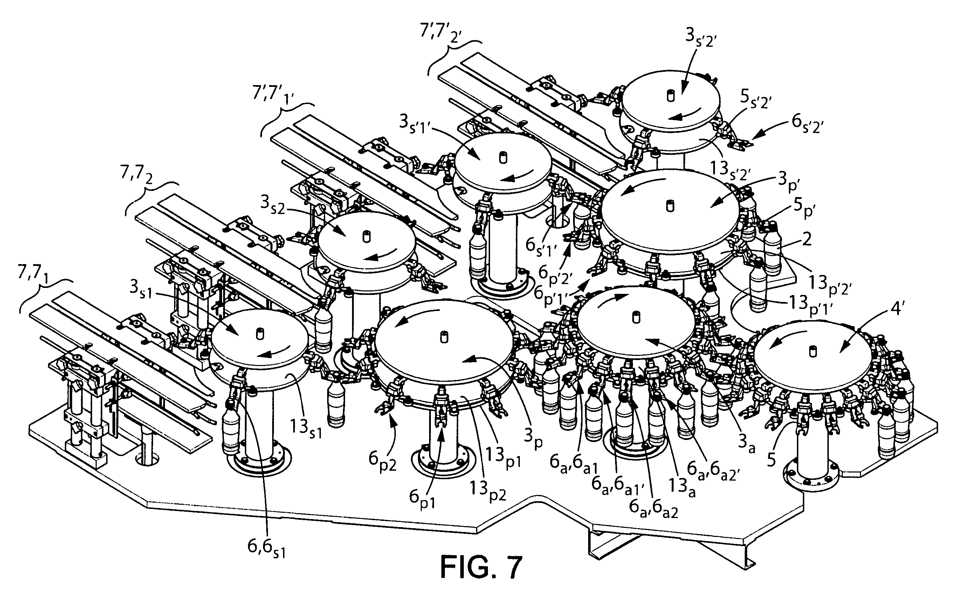

Il est représenté à la figure 7 une vue en perspective d'un dispositif appliquant le principe général de l'invention et permettant la division d'un flux principal de bouteilles 2 en quatre flux secondaires.

Selon ce mode de réalisation, il est prévu une roue 3a principale apte à saisir les bouteilles 2 en sortie d'une roue 4' de convoyage amont et à transférer les bouteilles 2 vers deux autres roues 3p, 3p', primaires (comme cela est le cas pour le mode de réalisation illustré à la figure 1).

De manière supplémentaire au premier mode de réalisation illustré à la figure 1, il est également prévu deux paires de deux roues 3s1, 3s2 et 3s'1, 3s'2 de convoyage en aval, chaque paire de roues 3s1, 3s2 et 3s'1, 3s'2 étant apte à saisir les bouteilles saisies par une des deux roues 3p, 3p' primaires, ce grâce à quoi le flux des bouteilles 2 saisies par chaque roue 3p, 3p', primaire est à son tour divisé en deux flux secondaires.

Les différentes familles de bouteilles 2 saisies par ces paires de roues 3s1, 3s2 et 3s'1, 3s'2 de convoyage en aval sont alors respectivement pour chacune de ces roues 3s1, 3s2 et 3s'1, 3s'2 en aval transférées respectivement dans un convoyeur 7.1, 7.2 et 7'.1, 7'.2 à air, du type tel que décrit dans la figure 1.

De manière alternative, il est également possible de mettre, à la place des convoyeurs 7, 7' à air, d'autres paires de roues de convoyage à bras de transfert permettant une nouvelle fois de diviser le flux des bouteilles 2 saisies par les roue 3s1, 3s2 et 3s'1, 3s'2 de convoyage en aval, ce qui aboutirait à la formation de huit flux secondaires.

Afin que les bouteilles 2 saisies soient transférées dans les convoyeurs 7, 7' à air avec leur collerette 8 apte à venir en appui sur les rails 21, 22, de guidage desdits convoyeur 7, 7', il est nécessaire que les roues 3s1, 3s2, 3s' 1, 3s'2 de convoyage distribuant les bouteilles 2 au convoyeur présentent des bras 5 de transfert du type représenté à la figure 3, c'est-à-dire avec une saisie de la bouteille 2 par son goulot 8, de manière à pouvoir poser la collerette 9 sur les rails 21, 22, de guidage.

De ce fait, il est nécessaire que les roues 3p, 3p' primaires présentent des bras 5 de transfert du type illustré à la figure 2, c'est-à-dire avec une saisie du récipient 2 en dessous de la collerette 9, et, par voie de conséquence, que la roue 3a principale présente des bras 5 de transfert du type illustré à la figure 3, c'est-à-dire avec une saisie de la bouteille 2 par son goulot 8.

Ainsi, du fait que les bouteilles 2 en sortie de machine de soufflage ne peuvent être saisies que par le dessous de leur collerette 9, il est alors nécessaire d'ajouter une roue 4' de convoyage en amont de la roue 3a principale permettant de saisir les bouteilles 2 par le dessous de la collerette 9. La roue 4' amont de convoyage présente donc des bras 5 de transfert du type illustré à la figure 2.

De plus, selon ce mode de réalisation, il peut être remarqué que les roues 3p, 3p' primaires présentent deux plateaux 13p1, 13p2 et 13p'1, 13p'2, fixes définissant deux chemins de came pour les galets des pinces portées par les bras 5 de transfert permettant de commander lesdits bras 5 de transfert pour un transfert des bouteilles 2 soit vers une première roue 3s, soit vers une deuxième roue 3s aval.

## Revendications

1. Dispositif de convoyage de récipients du type bouteilles (2), à l'aide de pinces (6) entre un organe d'alimentation et des organes d'acheminement, du type comprenant :
- une roue (3p) primaire d'entrée animée en rotation et équipée de pinces (6) qui sont portées par des bras (5) disposés en étoile,
- des moyens de transfert situés entre ladite roue (3p) primaire d'entrée et lesdits organes d'acheminement, lesquels moyens de transfert sont munis de pinces (6) plates également dont la vitesse tangentielle correspond à celle desdites pinces (6) de ladite roue (3p) primaire,
- laquelle roue (3p) primaire comporte plusieurs familles de pinces (6p) plates qui saisissent lesdites bouteilles (2) sous leur collerette (9), lesquelles familles de pinces (6p) sont associées à un mécanisme de commande pour réaliser l'ouverture et la fermeture desdites pinces en synchronisme avec, d'une part, les moyens de tenue desdites bouteilles (2) au niveau dudit organe d'alimentation et, d'autre part, lesdites pinces (6) desdits moyens de transfert,
- lesdits moyens de transfert sont constitués de plusieurs roues (3s) secondaires dont le nombre correspond au nombre de familles de pinces (6p) réparties sur ladite roue (3p) primaire, chaque roue (3s) secondaire comportant :
- des pinces (6s) qui sont également portées par des bras (5s) disposés en étoile sur un plateau, et
- un mécanisme de commande desdites pinces (6s) pour réaliser leur ouverture et leur fermeture en synchronisme avec, d'une part, l'ouverture et la fermeture des pinces (6p) correspondantes de ladite roue (3p) primaire et, d'autre part, les moyens de prise en charge disposés au niveau desdits organes d'acheminement en forme de convoyeurs (7),
- lesquelles pinces (6) des différentes roues (3), sont manoeuvrées par des moyens de commande constitués de galets (12) aptes à suivre un chemin de came façonné sur la périphérie d'un plateau (13) fixe qui est centré sur l'axe de la roue (3) correspondante,
**caractérisé en ce que** la roue (3p) primaire est associée à plusieurs plateaux (13) de came, qui sont superposés, chaque plateau étant associé à une famille de pinces (6p) pour réaliser l'ouverture et la fermeture desdites pinces en synchronisme avec, d'une part, les moyens de tenue desdites bouteilles (2) au niveau de l'organe d'alimentation et, d'autre part, les pinces (6s) des différentes roues (3s) secondaires.

2. Dispositif de convoyage de récipients, du type bouteilles (2), selon la revendication 1, **caractérisé en ce que** les pinces (6) des différentes roues (3) comportent, aménagés sur l'une au moins de leurs branches (10, 11), des moyens de calage qui s'étendent sur la hauteur de goulot (8) desdites bouteilles (2) pour maintenir l'axe de ce goulot (8) et de ladite bouteille dans une position qui est parallèle à l'axe desdites roues (3), lesquels moyens de calage sont aménagés de façon complémentaire pour pouvoir s'engrener autour dudit goulot (8).

3. Dispositif de convoyage de récipients, du type bouteilles (2), selon la revendication 2, **caractérisé en ce qu'**il comporte, pour les pinces (6p) de la roue (3p) primaire, des moyens de calage du goulot (8) qui sont constitués d'une butée (14) disposée sur la partie intérieure de la branche (11p) amont des pinces (6p), laquelle butée (14) est façonnée au-dessus de ladite branche (11p) pour épouser une portion du contour extérieur de la partie supérieure dudit goulot (8).

4. Dispositif de convoyage de récipients, du type bouteilles (2), selon l'une quelconque des revendications 2 ou 3, **caractérisé en ce que**, pour les pinces (6s) des roues (3s) secondaires, les deux branches (10, 11) desdites pinces (6s), comportent chacune, sur leur dessus, une surépaisseur en forme de mors (15, 15'), façonnée pour épouser une portion du contour supérieur du goulot (8).

5. Dispositif de convoyage de récipients du type bouteilles (2), selon l'une quelconque des revendications 1 à 4, **caractérisé en ce que**, dans le cas d'un transfert desdites bouteilles vers un convoyeur 7 du type convoyeur pneumatique, la branche aval des pinces (6s) des roues (3s) secondaires servant à alimenter ledit convoyeur (7), comporte un prolongement en forme de doigt (29) plat, lequel doigt est aménagé pour accompagner et pousser le goulot (8) de la bouteille (2) dans l'entrée (28) dudit convoyeur (7), afin de le propulser dans la zone dudit convoyeur où il est pris en charge par le flux d'air comprimé qui sort des ouïes (27) aménagées dans les parois (26) latérales du caisson (25) dans lequel circule l'air comprimé.

6. Dispositif de convoyage de récipients du type bouteilles (2), selon la revendication 5, **caractérisé en ce qu'**il comporte un nombre de convoyeurs (7) pneumatiques qui correspond au nombre de familles de pinces (6p) réparties sur la roue (3p) primaire, ainsi qu'au nombre de roues (3s) secondaires.

7. Dispositif de convoyage de récipients selon l'une quelconque des revendications 1 à 6, **caractérisé en ce qu'**il comprend plusieurs étages de division du flux principal de bouteilles (2) :
- un premier étage de division situé en aval de l'organe (4') d'alimentation et qui comprend une roue (3a) principale d'entrée qui distribue lesdites bouteilles (2) à une première série de roues (3p) primaires,
- plusieurs seconds étages de division situés chacun à la sortie de chaque roue (3p) et constitués de roues (3s) secondaires qui alimentent les différents organes d'acheminement desdites bouteilles, du type convoyeur (7).

8. Procédé de convoyage de récipients du type bouteilles (2), permettant la division d'un flux principal de bouteilles en une pluralité de flux secondaires, **caractérisé en ce qu'**il comprend au moins les étapes suivantes :
- saisie desdites bouteilles (2) provenant de l'organe d'alimentation, ladite saisie s'effectuant par le dessous de la collerette (9) desdites bouteilles, au moyen de pinces (6) portées par des bras (5) disposés en étoile sur une roue (3p) primaire animée en rotation,
- transfert des familles de bouteilles (2) saisies par ladite roue (3p) primaire vers des pinces (6s) disposées en bout de bras (5s) de transfert portés par des roues (3s) secondaires, lesquelles pinces (6s) saisissent lesdites bouteilles au-dessus de leur collerette (9),
- et transfert de chaque famille de bouteilles (2) vers un organe d'acheminement approprié du type convoyeur (7) pneumatique, par exemple, qui prend en charge lesdites bouteilles (2) sous ladite collerette (9),
- utilisant un dispositif selon l'une des revendications 1-7.

## Claims

1. Device for conveying vessels of the bottle (2) type, using clamps (6), between a feeding member and routing members, of the type comprising:
- a primary entry wheel (3p) rotated and equipped with clamps (6) which are supported by arms (5) arranged in a star pattern,
- transfer means situated between said primary entry wheel (3p) and said routing members, said transfer means also being provided with flat clamps (6) the tangential speed of which corresponds to that of said clamps (6) of said primary wheel (3p),
- which primary wheel (3p) comprises a plurality of groups of flat clamps (6p) grasping said bottles (2) under the rim (9) thereof, said groups of clamps (6p) being associated with a control mechanism to open and close said clamps in a synchronised manner, on the one hand with means for holding said bottles (2) at said feeding member and on the other hand with said clamps (6) of said transfer means,
said transfer means consist of a plurality of secondary wheels (3s), the number of which corresponds to the number of groups of clamps (6p) distributed on said primary wheel (3p), each secondary wheel (3s) comprising:
- clamps (6s), which are also supported by arms (5s) arranged in a star pattern on a plate, and
- a mechanism for controlling said clamps (6s) to open and close same in a synchronised manner with on the one hand, the opening and closure of the corresponding clamps (6p) of said primary wheel (3p) and, on the other hand, the handling means arranged on said routing members in the form of conveyors (7),
- which clamps (6) of the various wheels (3) are actuated by control means consisting of rollers (12) suitable for following a cam path formed on the periphery of a fixed plate (13) which is centred on the axis of the corresponding wheel (3),
**characterised in that** the primary wheel (3p) is associated with a plurality of stacked cam plates (13), each plate being associated with a group of clamps (6p) to open and close said clamps in a synchronised manner with, on the one hand, the means for holding said bottles (2) on the feeding member and, on the other hand, the clamps (6s) of the various secondary wheels (3s).

2. Device for conveying bottle (2) type vessels, according to claim 1, **characterised in that** the clamps (6) of the various wheels (3) comprise, provided on at least one of the arms (10, 11) thereof, adjustment means extending along the height of the neck (8) of said bottles (2) to hold the axis of said neck (8) and said bottle in a position which is parallel with the axis of said wheels (3), said adjustment means being arranged in a complementary manner to be able to engage about said neck (8).

3. Device for conveying bottle (2) type vessels, according to claim 2, **characterised in that** it comprises, for the clamps (6p) of the primary wheel (3p), neck (8) adjustment means consisting of an abutment (14) arranged on the inner portion of the upstream arm (11p) of the clamps (6p), said abutment (14) being formed above said arm (11p) to mould at least one portion of the outer contour of the upper portion of said neck (8).

4. Device for conveying bottle (2) type vessels, according to any of claims 2 or 3, **characterised in that**, for the clamps (6s) of the secondary wheels (3s), both arms (10, 11) of said clamps (6s) each comprise, on the top thereof, an additional thickness in the form of jaws (15, 15') formed to mould a portion of the upper contour of the neck (8).

5. Device for conveying bottle (2) type vessels, according to any of claims 1 to 4, **characterised in that**, in the case of a transfer of said bottles to a pneumatic conveyor type conveyor (7), the downstream arm of the clamps (6s) of the secondary wheels (3s) for feeding said conveyor (7), comprise an extension in the form of a flat catch (29), said catch being arranged to guide and push the neck (8) of the bottle (2) into the entry (28) of said conveyor (7), so as to propel same in the zone of said conveyor where it is handled effectively by the compressed air flow from the ports (27) provided in the side walls (26) of the caisson (25) wherein the compressed air circulates.

6. Device for conveying bottle (2) type vessels, according to claim 5, **characterised in that** it comprises a number of pneumatic conveyors (7) equivalent to the number of groups of clamps (6p) distributed on the primary wheel (3p), and to the number of secondary wheels (3s).

7. Device for conveying bottle type vessels, according to any of claims 1 to 6, **characterised in that** it comprises a plurality of stages for separating the main flow of bottles (2):
- a first separation stage situated downstream from the feeding member (4') and comprising a main entry wheel (3a) which distributes said bottles (2) to a first series of primary wheels (3p),
- a plurality of second separation stages each situated at the outlet of each primary wheel (3p) and consisting of secondary wheels (3s) feeding the various conveyor (7) type members for routing said bottles.

8. Method for conveying bottle (2) type vessels for separating a main bottle flow into a plurality of secondary bottle flows, **characterised in that** it comprises at least the following steps:
- grasping of said bottles (2) from the routing member, said grasping being performed from below the rim (9) of said bottles, by means of clamps (6) borne by arms (5) arranged in a star pattern on a rotating primary wheel (3p);
- transfer of the groups of bottles (2) grasped by said primary wheel (3p) to clamps (6s) arranged at the end of transfer arms (5s) borne by secondary wheels (3s), said clamps (6s) grasping said bottles above the rim (9) thereof,
- and transfer of each group of bottles (2) to a suitable pneumatic conveyor (7) type routing member, for example, which handles said bottles (2) under said rim (9,
- using a device according to any of claims 1-7..

## Patentansprüche

1. Transportvorrichtung für Behälter des Typs Flasche (2) zwischen einer Zuführeinrichtung und Weiterleitungseinrichtungen mittels Greifern (6), mit:
- einem primären Eintrittsrad (3p), das rotierend angetrieben und mit Greifern (6) ausgestattet ist, die von sternenförmig angeordneten Armen (5) getragen werden,
- einem Überführungsmittel, das zwischen dem primären Eintrittsrad (3p) und den Weiterleitungseinrichtungen angeordnet ist, wobei das Überführungsmittel mit gleichflachen Greifern (6) versehen ist, deren Tangentialgeschwindigkeit der der Greifer (6) des primären Rads (3p) entspricht,
- wobei das primäre Rad (3p) mehrere Gruppen von flachen Greifern (6p) aufweist, die die Flaschen (2) unter ihren Kragen (9) greifen, wobei die Gruppen von Greifern (6p) mit einem Steuermechanismus verknüpft sind, um das Öffnen und das Schließen der Greifer synchron auszuführen, und zwar in einem Abschnitt mit dem Haltemittel der Flaschen (2) auf Höhe der Zuführeinrichtung und in einem anderen Abschnitt mit den Greifern (6) des Überführungsmittels,
- wobei das Überführungsmittel aus mehreren sekundären Rädern (3s) gebildet ist, deren Anzahl der Anzahl der Gruppen von Greifern (6p) entspricht, die an dem primären Rad (3p) verteilt sind, wobei jedes sekundäre Rad (3s) aufweist:
- Greifer (6s), die gleichfalls über Arme (5s) getragen werden, die sternenförmig auf einer Platte angeordnet sind, und
- ein Steuermechanismus für die Greifer (6s), um ihr Öffnen und Schließen synchron auszuführen, und zwar in einem Abschnitt mit dem Öffnen und Schließen der jeweiligen Greifer (6p) des primären Rads (3p) und in einem anderen Abschnitt mit Übernahmemitteln, die auf Höhe der Weiterleitungseinrichtungen in Form von Fördereinrichtungen (7) angeordnet sind,
- wobei die Greifer (6) der verschiedenen Räder (3) über das Steuerungsmittel gesteuert werden, die als Rollen (12) ausgeführt sind, die geeignet sind, einem Kurvenpfad entlang des Umfangs einer feststehenden Platte (13) zu folgen, die zur der Achse des jeweiligen Rads (3) zentriert ist,
**dadurch gekennzeichnet, dass** das primäre Rad (3p) mit mehreren sich überlagernden Kurvenplatten (13) verknüpft ist, wobei jede Platte mit einer Gruppe von Greifern (6p) verknüpft ist, um das Öffnen und Schließen der Greifer synchron auszuführen, und zwar in einem Abschnitt auf Höhe der Zuführeinrichtung mit dem Haltemittel der Flaschen (2) und in einem anderen Abschnitt mit den Greifern (6s) der verschiedenen sekundären Räder (3s).

2. Transportvorrichtung für Behälter des Typs Flasche (2) gemäß Anspruch 1, **dadurch gekennzeichnet, dass** die Greifer (6) der verschiedenen Räder (3) über mindestens einem ihrer Schenkel (10, 11) angeordnet ein Positionierungsmittel aufweisen, das sich auf Höhe der Hälse (8) der Flaschen (2) erstreckt, um die Achse des Halses (8) und der Flasche in einer Position zu halten, die parallel zu der Achse der Räder (3) ist, wobei die Positionierungsmittel auf eine komplementäre Weise ausgebildet sind, um mit dem Hals (8) ineinandergreifen zu können.

3. Transportvorrichtung für Behälter des Typs Flasche (2) gemäß Anspruch 2, **dadurch gekennzeichnet, dass** sie für die Greifer (6p) des primären Rads (3p) Positionierungsmittel für den Hals (8) aufweist, die aus einem Anschlag (14) gebildet sind, der an dem inneren Abschnitt des oberhalben Schenkels (11p) der Greifer (6p) angeordnet ist, wobei der Anschlag (14) über dem Schenkel (11p) ausgebildet ist, um an einen Abschnitt der Außenkontur des oberen Abschnitts des Halses (8) angepasst zu sein.

4. Transportvorrichtung für Behälter des Typs Flasche (2) gemäß einem der Ansprüche 2 oder 3, **dadurch gekennzeichnet, dass** bei den Greifern (6s) der sekundären Räder (3s) die zwei Schenkel (10, 11) der Greifer (6s) jeweils auf ihrer Oberseite eine Verdickung in Form von Spannbacken (15, 15') aufweisen, die ausgebildet ist, um an einen Abschnitt der oberen Kontur des Halses (8) angepasst zu sein.

5. Transportvorrichtung für Behälter des Typs Flasche (2) gemäß einem der Ansprüche 1 bis 4, **dadurch gekennzeichnet, dass** im Fall einer Überführung der Flaschen zu einer pneumatischen Fördereinrichtung (7), der nachgeschaltete Schenkel der Greifer (6s) der sekundären Räder (3s), der dazu dient, die Fördereinrichtung (7) zu beschicken, einen flachen daumenförmigen Fortsatz (29) aufweist, wobei der Fortsatz eingerichtet ist, um den Hals (8) der Flasche (2) zu begleiten und in den Eingang (28) der Fördereinrichtung (7) zu schieben, um ihn in den Bereich der Fördereinrichtung zu treiben, wo er von einem Druckluftstrom übernommen wird, der aus Löchern (27) austritt, die in den seitlichen Wänden (26) der Kammer (25) angeordnet sind, in der die Druckluft zirkuliert.

6. Transportvorrichtung für Behälter des Typs Flasche (2) gemäß Anspruch 5, **dadurch gekennzeichnet, dass** sie eine Anzahl pneumatischer Fördereinrichtungen (7) aufweist, die der Anzahl der auf dem primären Rad (3p) verteilten Gruppen von Greifern (6p) entspricht und damit der Anzahl von sekundären Rädern (3s).

7. Transportvorrichtung für Behälter gemäß einem der Ansprüche 1 bis 6, **dadurch gekennzeichnet, dass** sie mehrere Teilungsstufen für den Hauptstrom der Flaschen (2) aufweist:
- eine erste Teilungsstufe, die der Zuführeinrichtung (4') nachgeschaltet ist und die ein Haupteintrittsrad (3a) aufweist, das die Flaschen auf eine erste Reihe von primären Rädern (3p) verteilt,
- mehrere zweite Teilungsstufen, die jeweils am Austritt eines jeden Rads (3p) angeordnet sind und aus sekundären Rädern (3s) gebildet sind, die die verschiedenen Weiterleitungseinrichtungen der Flaschen des Typs Fördereinrichtung (7) beschicken.

8. Transportverfahren für Behälter des Typs Flasche (2), das eine Teilung eines Hauptstroms von Flaschen in eine Vielzahl von sekundären Strömen ermöglicht, **dadurch gekennzeichnet, dass** es zumindest die folgenden Stufen aufweist:
- Eingabe der von der Zuführeinrichtung kommenden Flaschen (2), wobei die Eingabe über die Unterseite des Kragens (9) der Flaschen mittels von Armen (5) getragener Greifer (6) erfolgt, die sternenförmig an einem rotierend angetriebenen primären Rad (3p) angeordnet sind,
- Überführung von Gruppen von Flaschen (2), die über das primäre Rad (3p) in Richtung der Greifer (6s) eingegeben werden, die außen auf den Überführungsarmen (5s) angeordnet sind, die von sekundären Rädern (3s) getragen werden, wobei die Greifer (6s) die Flaschen oberhalb ihres Kragens (9) eingeben,
- und Überführung einer jeden Gruppe von Flaschen (2) in Richtung einer Weiterleitungseinrichtung des Typs pneumatische Fördereinrichtung (7), die zum Beispiel die Flaschen (2) unterhalb des Kragens (9) übernimmt,
- unter Verwendung einer Vorrichtung gemäß einem der Ansprüche 1 bis 7.
